# EUROPEAN PATENT APPLICATION

(11) **EP 2 922 163 A1**
(43) Date of publication of application: **23.09.2015**
(21) Application number: 15159329.0
(22) Date of filing: 17.03.2015
(51) Int. Cl.: H02G 9/10

(54) **Container for holding at least a part of a cable or cables underground, method of installing a part of a network, and communications network**

(30) Priority: 17.03.2014 NL 2012454
(71) Applicant: Draka Comteq B.V., 1083 HJ Amsterdam (NL)
(72) Inventor: Doorn, Mijndert, 1083 HJ Amsterdam (NL); Zeng, Jianming, 1083 HJ Amsterdam (NL); van Trigt, Kees, 1083 HJ Amsterdam (NL)
(74) Representative: Jansen, Cornelis Marinus

(57) **Abstract**

The invention is directed at a container 1 for holding at least a part of a cable or a part of multiple cables underground, the container comprising a bottom 2, a cover 3, and a support structure 14 for securing the cover 3 to the bottom 2 remotely therefrom to provide a containment space between the bottom 2 and the cover 3 to enable storing of the at least part of the cable or cables 20, wherein the cover 3 is formed having an open structure comprising 14 a plurality of openings 8 across a surface of the cover 3 to allow ground to penetrate the openings 8 and fill the containment space 5 in use upon installation of the container 1 in the ground.

## Description

### Field of the invention

The present invention is directed at a container for holding at least a part of a cable or a part of multiple cables underground, the container comprising a bottom, a cover, and a support structure for securing the cover to the bottom remotely therefrom to provide a containment space between the bottom and the cover to enable storing of the at least part of the cable or cables. The invention is further directed at a method of installing a part of a network, including connecting at least two cables and storing at least a part of said at least two cables in the ground. Moreover, the invention is directed at a communications network.

### Background

Wide area networks (WANs) and metropolitan area networks (MANs) comprise junctions of the fiber optical cable at regular intervals. These junctions are for example required for interconnecting cable lengths such as to span large distances, or are installed at branches. Moreover, maintenance and repair works may also require the installation of junctions. To install a junction, a splice needs to be created in the fiber optical cables to allow making an interconnection.

A common method to make splices in fiber optical cables is to make the splice in a controlled environment (typical in a minivan) and place the splice closure and the excess cable length (necessary to reach the minivan) in a plastic or concrete handhole. New developments however involve undeep trenching which does not always allow for the use of a handhole. Moreover, also cost savings due to restrictions in network CAPEX renders the use of handholes more and more undesired lately.

Placing of the splice closure and the coiled excess length of cable directly in the ground leads to problems. The coiled cable excess length takes more space than the trench width, leading to practical access and legal issues. Also the coiled cable excess length is stored without any mechanical protection, making it prone to it's environment and increasing the risk of network failure.

### Summary of the invention

It is an object of the present invention to provide low cost container for holding fiber lengths underground, which is installable in undeep trenches, and which resolves the disadvantages recited above.

To this end, there is provided herewith a container for holding at least a part of a cable or a part of multiple cables underground, the container comprising a bottom, a cover, and a support structure for securing the cover to the bottom remotely therefrom to provide a containment space between the bottom and the cover to enable storing of the at least part of the cable or cables, wherein the cover is formed having an open structure comprising a plurality of openings across a surface of the cover to allow ground to penetrate the openings and fill the containment space in use upon installation of the container in the ground.

In the container in accordance with the present invention, the open structure of the cover of the container allows ground to penetrate through the openings of the cover upon backfilling of a trench when the cable is installed in the container. When the containment space is efficiently filled, it provides structural integrity to the container itself, protects the cable from its environment and from any forces exerted on the surface of the ground above the container. Moreover, the container can be manufactured at low cost, and is easily installable upon installation of the network, or whenever maintenance or repair works are needed.

In accordance with an embodiment of the present invention, the cover comprises at least one of a group comprising: a grid wherein the plurality of openings are formed by the holes of the grid, a wall comprising said plurality of openings, or a wall comprising one or more cut-out portions. When the cover is created in the form of a grid, ground can easily fall through the openings in the grid into the containment phase. In view of its open structure the use of a grid provides a preferred embodiment. However other implementations can be thought of. Likewise, the use of a wall comprising a plurality of openings across its surface or a wall comprising one or more larger cut out portions may also protect the cable installed in the container to a larger or lesser extent against forces exerted on the surface of the ground above.

The advantages of the container of the present invention are further increased when also the support structure that secures the cover to the bottom of the container is formed having an open structure. Such an open structure may for example be obtained by the support structure comprising one or more legs extending between the bottom and the cover, for the securing of the cover to bottom remotely therefrom. Any disturbances in the ground or forces exerted above or to the side of the container allows the ground inside the containment space to move to the side through the support structure, instead of transferring such movements or forces to the cables installed. Therefore, the open structure of the container having the relatively open cover and a relatively open side structure comprised of legs efficiently protects the cable against forces exerted on the surface of the ground or movement of the ground itself.

Even more preferred, also the bottom of the container is formed having an open structure comprising a plurality of openings across a surface of the bottom to allow ground to penetrate the openings and fill the containment space in use upon installation of the container in the ground. For example, also the bottom of the container can be made by means of a grid or a wall having a plurality of openings across its surface. In the preferred embodiment wherein all of the bottom, the cover, and the support structure are provided having an open structure or open configuration, the ground inside or around the containment space may move in all directions, to a minimal extent hampered by the container. Not only can the ground easily fill the containment space upon installation, but also after installation the ground can easily move inside or outside the containment space under influence of forces or movements of its surrounding. This prevents the occurrence of voids in the ground. At the same time, because the cable is held within the containment space, it is protected from such forces or movement by the reinforcement provided by the structure of the container. For example, a force exerted on the surface of the grounds on top of the container will be exerted on the cover, and will be led through the legs of the support structure towards the bottom of the container and to the ground below. Therefore the cable inside the container is effectively protected while the ground therein is allowed to move.

Instead of a structure comprising one or more legs extending between the bottom and the cover, the support structure may also comprise a wall or grid having openings or holes therein such as to allow movement of the ground into or out of the containment space. A further embodiment that may be foreseen is that the support structure provides for one or more legs extending between the middle sections of the bottom or cover of the container. To some extend this may prevent the need for legs at the circumference of the container. Although such an embodiment still allows for easy installation and has an open structure for allowing the ambient ground to move in any desired direction, the structural integrity may be less around the circumference and it does not completely prevent the cable from moving outside the container.

According to a second aspect thereof, there is provided a method of installing a part of a network, including connecting at least two cables and storing at least a part of said at least two cables in the ground, the method further including: installing a container in the ground, wherein the container comprises a bottom, a cover, and a support structure for securing the cover to the bottom remotely therefrom to provide a containment space, wherein the cover is formed having an open structure comprising a plurality of openings across a surface of the cover; storing of at least a part of the two cables in the container in the containment space thereof; backfilling of the ground such as to bury the container and to allow ground to penetrate the container at least through the openings of the cover to fill the containment space. In particular, such a method may further comprise a step of rowling or trembling or vibrating the ground after or during backfilling thereof such as to thereby close any void in or around the container. The network to be installed may be an optical communications network, although the container may be used for storing different types of cable underground as well. Moreover, the container may not only store the access cable length, but also the connecting unit which connects the cable ends with each other - the supplies closure - can be installed inside the containment space of the container.

In accordance with a third aspect, there is provided a plurality of underground fiber optic cables, including at least two fiber optic cables that are interconnected using a connection unit, wherein at least part of the interconnected cables and the connection unit is stored in a container underground, the container comprising a bottom, a cover, and a support structure for securing the cover to the bottom remotely therefrom to provide a containment space between the bottom and the cover to enable storing of the at least part of the cables and the connection unit, wherein the cover is formed having an open structure comprising a plurality of openings across a surface of the cover to allow ground to penetrate the openings and fill the containment space in use upon installation of the container in the ground.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 schematically illustrates a container in accordance with the present invention;
Figure 2 illustrates a container or cable cage in accordance with the present invention while being installed;
Figure 3 illustrates the container or cable cage of figure 2 after the cover has been placed;
Figure 4 schematically illustrates the container of the present invention in the ground.

### Detailed description

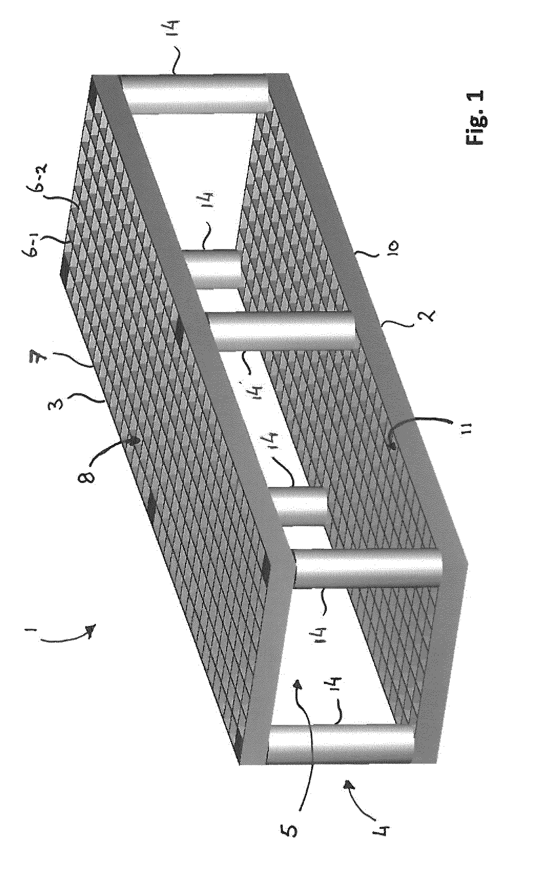

The container 1 is arranged for holding excess cable contained underground within the containment space 5 of the container. The containment space 5 is enclosed by a bottom 2, a cover 3, and a support structure 4. The support structure 4 secures the cover 3 to the floor or bottom 2 of the container keeping a certain distance therebetween such as to form the containment space 5. Thereto, the support structure 4 in the container 1 of figure 1 is formed by six legs 14 that are fixed with their ends in the bottom 2 and cover 3 of the container respectively.

In accordance with the present invention, the cover 3 is formed by a grid 7, the frame of which provides for a plurality of openings 8 between the frame structure elements of the grid 7. Being formed of horizontal strips 6-2 and vertical strips 6-1, the grid 7 provides square shaped openings 8 therebetween. As will be appreciated, the invention is not limited to any specific type of grid or any specific frame structure. Instead of the horizontal strips 6-2 and vertical strips 6-1, the frame of the grid 7 may likewise be shaped differently, for example in the form of a honeycomb structure or any other type of grid.

In the embodiment of figure 1, the cover 3 of the container 1 is formed of a grid 7 such as to provide an open structure. A granulated ambient filling, such as ground or sand, may easily penetrate through the openings 8 in the grid 7 to reach the interior containment space 5 in between the floor 2 and cover 3. Instead of using a grid, the cover 3 may be differently designed such as to provide for a plurality of openings through which ground may penetrate into the container. The open structure of the cover 3 provides for a cage-like construction. In addition to the cover 3, in the container 1 of figure 1, the floor or bottom 2 is also formed of a similar grid 10 having a plurality of openings 11 through which ground or any other ambient granulate may penetrate. Having such an open cage like structure provides the advantage that a cable being stored in the containment space 5 of the container 1 is protected from any forces exerted on the container during normal use underground. Such forces and other underground processes may also give rise to displacement of ground. By having a cage-like open construction as illustrated in figure 1, the container 1 efficiently leads any forces exerted thereon away from the cables, while at the same time allowing underground ground displacement (e.g. due to ground water, rain water, vibrations, erosion, etcetera) to take place undisturbed.

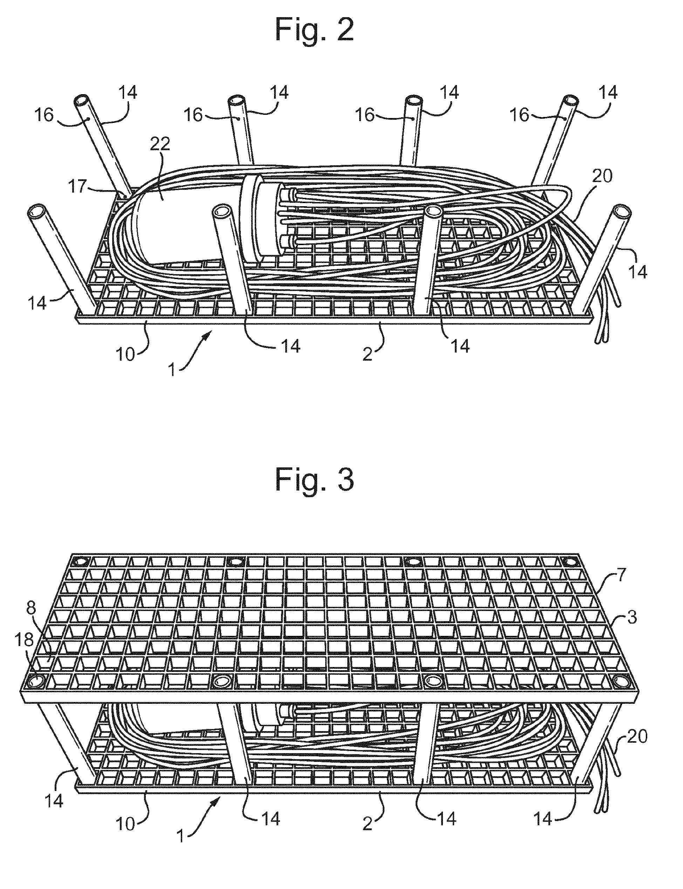

Figure 2 illustrates a similar container or cable cage 1 as is illustrated in figure 1 (however the cable cage 1 of figure 2 is slightly longer). The cover of the cable cage has been removed such as to place a coiled cable excess length inside the containment space 5 of the container 1. The coiled excess cable length comprises a plurality of cables 20 (within cable ducts) and a splice box or splice closure 22, all of which are placed inside the container 1. The legs 14 of the container 1 comprise small protrusions 16 and 17 remotely from either end of the legs. These protrusions enable to secure the bottom 2 and cover 3 remotely from each other to the legs. Figure 3 illustrates the same container 1 as illustrated in figure 2, however the cover 3 has been placed on top of the legs 14 of the support structure. As can be seen, the openings 8 in the grid 7 of the cover 3 correspond to the cross sections of the legs 14, such that the end points 18 of the legs extend into the openings 8 of the grid 7 for fixing the cover 3 to the legs 14. The protrusions 16 illustrated in figure 1 allow the cover 3 to be fixed to the legs 14 at a desired distance from the bottom 2. The cables 20 and splice closure 22 are effectively protected by the container 1 when placed in a trench underground and during and after the trench is backfilled.

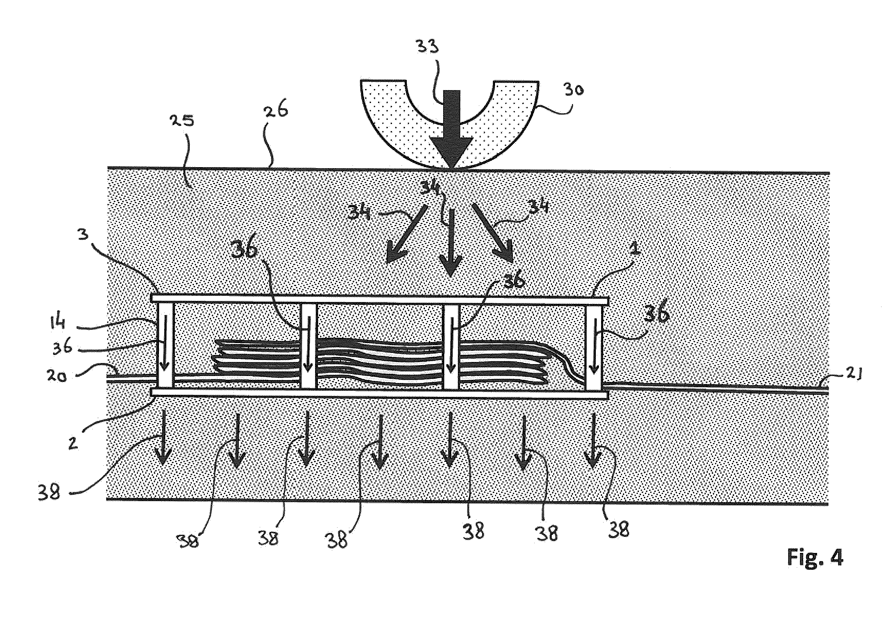

Figure 4 schematically illustrates how the construction of container 1 effectively protects the cables 20, 21 from disturbances underground. Figure 4 schematically illustrates a cable cage or container 1 placed in the ground 25, and comprising the coiled excess cable lengths of cables 20 and 21. The splice closure may be placed in the middle of the coiled ends 20 and 21 and is not visible in figure 4. Schematically, the wheel 30 of a heavy truck is illustrated resting on the surface 26 of the ground 25. The wheel 30 exerts a force schematically indicated by arrow 33. The force 33 distributes as is indicated by arrows 34 within the ground, and is thereby passed on onto the cover 3 of the container 1. The container 1 effectively leads away the forces exerted on the cover 3 through the legs, as is indicated by arrows 36 on legs 14 of the container 1. The force is thereby exerted on the bottom 2 of the container, which passes this force onto the ground underneath, which is illustrated schematically by arrows 38 in figure 4. Also visible in figure 4 is that the ground surrounding the container 1 may freely move under influence of, for example, underground fluids or other movements, in any direction into or out of the container 1 with the open structure. This effectively protects the cables 20 and 21 and any other equipment placed in the container from disturbances underground.

The present invention has been described in terms of some specific embodiments thereof. It will be appreciated that the embodiments shown in the drawings and described herein are intended for illustrated purposes only and are not by any manner or means intended to be restrictive on the invention. The context of the invention discussed here is merely restricted by the scope of the appended claims.

## Claims

1. Container for holding at least a part of a cable or a part of multiple cables underground, the container comprising a bottom, a cover, and a support structure for securing the cover to the bottom remotely therefrom to provide a containment space between the bottom and the cover to enable storing of the at least part of the cable or cables, wherein the cover is formed having an open structure comprising a plurality of openings across a surface of the cover to allow ground to penetrate the openings and fill the containment space in use upon installation of the container in the ground.

2. Container according to claim 1, wherein the cover comprises at least one of a group comprising: a grid wherein the plurality of openings are formed by the holes of the grid, a wall comprising said plurality of openings, or a wall comprising one or more cut-out portions.

3. Container according to any of the claims 1 or 2, wherein the support structure is formed having an open structure to enable ground to fill the containment space through the support structure.

4. Container according to claim 3, wherein the support structure comprises one or more legs extending between the bottom and the cover, for the securing of the cover to bottom remotely therefrom.

5. Container according to claim 4, wherein the one or more legs extend between the bottom and the cover at one or more locations at least partially around the periphery of the container space for supporting at least one of the bottom or cover at a circumferential edge thereof.

6. Container according to claim 4 or 5, wherein the one or more legs extend between the bottom and the cover at one or more locations in a middle section of at least one of the cover or the bottom such as to allow the at least one part of the cable to be arranged around the one or more legs in the middle section.

7. Container according to any of the claims 3-6, wherein the support structure comprises at least one of a group comprising: a grid wherein the plurality of openings of the support structure are formed by the holes of the grid, a side wall extending between the bottom and the cover and comprising said plurality of openings of the support structure, or a side wall comprising one or more cut-out portions as being the openings of the support structure.

8. Container according to any of the previous claims, wherein the bottom is formed having an open structure comprising a plurality of openings across a surface of the bottom to allow ground to penetrate the openings and fill the containment space in use upon installation of the container in the ground.

9. Container according to claim 8, wherein the bottom comprises at least one of a group comprising: a grid wherein the plurality of openings of the bottom are formed by the holes of the grid, a wall comprising said plurality of openings of the bottom, or a wall comprising one or more cut-out portions as being or comprising the openings of the bottom.

10. Method of installing a part of a network, including connecting at least two cables and storing at least a part of said at least two cables in the ground, the method further including:
installing a container in the ground, wherein the container comprises a bottom, a cover, and a support structure for securing the cover to the bottom remotely therefrom to provide a containment space, wherein the cover is formed having an open structure comprising a plurality of openings across a surface of the cover;
storing of at least a part of the two cables in the container in the containment space thereof;
backfilling of the ground such as to bury the container and to allow ground to penetrate the container at least through the openings of the cover to fill the containment space.

11. Method according to claim 10, wherein either one or both of the bottom and the support structure comprises an open structure comprising a plurality of openings for allowing ground to penetrate the containment space through the bottom and/or the support structure during said backfilling.

12. Method according to claim 10 or 11, further comprising a step of rolling or trembling of the ground after or during backfilling, such as to close voids in or around said container.

13. Method according to any of claims 10-12, wherein said network is an optical communications network, and said cables are fiber optical cables.

14. Method according to any of the claims 10-13, wherein the at least two cables are interconnected using a connection unit, and wherein the step of storing of the at least two cables includes storing of the connection unit in the containment space of the container.

15. Communications network comprising a plurality of underground fiber optic cables, including at least two fiber optic cables that are interconnected using a connection unit, wherein at least part of the interconnected cables and the connection unit is stored in a container underground, the container comprising a bottom, a cover, and a support structure for securing the cover to the bottom remotely therefrom to provide a containment space between the bottom and the cover to enable storing of the at least part of the cables and the connection unit, wherein the cover is formed having an open structure comprising a plurality of openings across a surface of the cover to allow ground to penetrate the openings and fill the containment space in use upon installation of the container in the ground.
